# FASCICULE DE BREVET EUROPEEN

(11) **EP 2 959 656 B1**
(45) Date de publication et mention de la délivrance du brevet: **01.08.2018**
(21) Numéro de dépôt: 14710012.7
(22) Date de dépôt: 14.02.2014
(51) Int. Cl.: H04L 29/06, H04W 12/08

(54) **TECHNIQUE D'APPAIRAGE DANS UN RÉSEAU SANS FIL**
PAARUNGSVERFAHREN IN EINEM DRAHTLOSEN NETZWERK
TECHNIQUE OF PAIRING IN A WIRELESS NETWORK

(30) Priorité: 21.02.2013 FR 1351479
(43) Date de publication de la demande: 30.12.2015
(73) Titulaire: Orange, 75015 Paris (FR)
(72) Inventeur: EVENNOU, Frédéric, 69003 Lyon (FR); SIDHOUM, Sami, 38100 Grenoble (FR)
(86) Numéro de dépôt international: PCT/FR2014/050307
(87) Numéro de publication internationale: WO 2014/128390

(56) Documents cités:
- WO-A1-2006/079953
- US-A1- 2004 168 081

## Description

L'invention concerne une technique d'appairage dans un réseau sans fil, à l'issue de laquelle un dispositif terminal est associé avec une entité coordinatrice.

Dans le cadre des applications domotiques, des réseaux sans fil de faible consommation sont constitués. De tels réseaux sont notamment connus sous la terminologie de réseaux personnels sans fil WPAN, pour « Wireless Personal Area Network ». La portée de ces réseaux est de l'ordre de quelques dizaines de mètres. Ce type de réseau permet généralement de relier des dispositifs terminaux à une entité centrale ou coordinatrice. Les dispositifs terminaux (ou « end device » en anglais) sont par exemple des capteurs (tels que des sondes de température, des lampes), ou des actionneurs (tels que des boutons de commande de lampes), .... L'entité coordinatrice est par exemple une passerelle d'accès à un réseau de communication. Le protocole ZigBee, tel que défini par l'Alliance ZigBee, est un protocole de haut niveau permettant la communication entre les dispositifs terminaux et l'entité coordinatrice s'appuyant sur la norme IEEE 802.15.4 pour les couches basses. La communication entre les dispositifs terminaux et l'entité coordinatrice d'un réseau personnel sans fil s'effectue sur un canal de communication courant.

Pour mettre en service un nouveau dispositif terminal dans le réseau personnel sans fil, il est nécessaire d'associer ou appairer le nouveau dispositif terminal avec l'entité coordinatrice. L'entité coordinatrice est dans un premier temps configurée pour accepter un appairage avec de nouveaux dispositifs terminaux. Dans un deuxième temps, le nouveau dispositif terminal effectue un balayage des différents canaux de communication afin de détecter une entité coordinatrice acceptant l'appairage de nouveaux appareils au sein de son réseau privé. Une fois un réseau détecté, le nouveau dispositif terminal s'associe avec l'entité coordinatrice de celui-ci. En cas de présence dans un même environnement de plusieurs entités coordinatrices, par exemple dans un immeuble, le nouveau dispositif terminal peut s'appairer à tort sur un autre réseau personnel. De plus, au cours de cet appairage, le nouveau dispositif terminal reçoit des informations relatives à la configuration du canal de communication, notamment une clé de chiffrement utilisée dans le réseau personnel sans fil. Ces informations sont reçues protégées par une clé qui est commune à l'ensemble des réseaux personnels. La clé de chiffrement utilisée dans le réseau personnel sans fil peut ainsi être interceptée par un tiers lors de cette première transmission.

Afin d'améliorer cette situation, des outils de mise en service sont proposés par des constructeurs. Le document brevet WO2010/017281 décrit un tel outil. L'outil de mise en service peut être intégré dans l'entité coordinatrice. Cet outil accède à une base de données de clés de chiffrement respectivement associées à des dispositifs terminaux. Après l'appairage du dispositif terminal avec l'entité coordinatrice, un canal sécurisé est établi entre l'entité coordinatrice et le dispositif terminal appairé. Lorsqu'un chiffrement symétrique est utilisé pour le canal sécurisé, l'outil de mise en service mémorise la clé de chiffrement associée au dispositif terminal. Lorsqu'un chiffrement asymétrique est utilisé pour le canal sécurisé, l'entité coordinatrice mémorise une clé publique associée à la clé privée du dispositif terminal. La clé de chiffrement utilisée dans le réseau personnel sans fil est alors transmise au moyen du canal sécurisé établi. Toutefois, cette solution nécessite un accès par l'entité coordinatrice à la base de données, qui est partagée entre différents acteurs, par l'intermédiaire d'un réseau de communication. De plus, dans cette solution, l'entité coordinatrice est contrainte d'ouvrir son réseau personnel à l'appairage de tout nouveau dispositif terminal. Dans le cas de l'immeuble précité, de nouveaux dispositifs terminaux peuvent s'appairer à tort avec l'entité coordinatrice. Ils peuvent être même inconnus dans la base de données. Le document US2004/0168081 décrit un procédé d'appairage dans lequel un réseau temporaire est créé pour l'échange de l'information d'un réseau privé sans fil. Un des buts de l'invention est de remédier à des insuffisances/inconvénients de l'état de la technique et/ou d'y apporter des améliorations.

Selon un premier aspect, l'invention a pour objet un procédé d'appairage d'un dispositif avec une entité coordinatrice d'un réseau privé sans fil. Ce procédé comprend les étapes suivantes mises en oeuvre par l'entité coordinatrice :
- une étape d'obtention d'un identifiant dudit dispositif et d'un identifiant de réseau temporaire propre au dispositif ;
- une première étape de réception sur le réseau temporaire d'une demande d'association au réseau temporaire en provenance du dispositif identifié ;
- une étape de transmission sur le réseau temporaire audit dispositif identifié d'une clé de chiffrement associée au réseau privé sans fil et d'un identifiant du réseau privé ;
- une étape de commande d'un basculement dudit dispositif du réseau temporaire au réseau privé sans fil :
- une deuxième étape de réception sur le réseau privé d'une demande d'association en provenance dudit dispositif identifié, l'entité coordinatrice et le dispositif étant alors associés.

Plus précisément, le procédé comprend une étape d'attente du dispositif identifié sur le réseau temporaire déclenchée suite à l'obtention desdits identifiants. De plus, l'étape de transmission sur le réseau temporaire est déclenchée après vérification que le dispositif ayant transmis la demande d'association correspond au dispositif identifié.

Ainsi, grâce au procédé d'appairage, l'entité coordinatrice et le dispositif à appairer ont rendez-vous sur un réseau temporaire ou de mise en service, propre au dispositif à appairer. Sur ce réseau temporaire, le dispositif à appairer reçoit des caractéristiques du réseau privé, telles que l'identifiant du réseau privé et la clé de chiffrement associée au réseau privé. Ceci permet de garantir que le dispositif terminal va sélectionner directement le réseau privé sur lequel il sera mis en service. Le dispositif terminal ne va pas ainsi tenter de s'appairer avec un autre réseau privé situé dans son environnement. Par ailleurs, la clé de chiffrement n'est pas transmise sur le réseau privé, ce qui apporte un premier niveau de sécurité. De plus, l'échange de clés a lieu avant l'association de l'appareil sur le réseau privé opérationnel. Contrairement au document brevet WO2010/017281, il n'est pas nécessaire d'accéder à une base de données centrale. La mise en service peut être ainsi effectuée localement. Le réseau temporaire étant propre au dispositif à appairer, seul ce dernier est accepté par l'entité coordinatrice sur le réseau temporaire.

De plus, le réseau privé n'est jamais ouvert à l'association. En effet, le dispositif à appairer rejoint directement le réseau privé identifié. Il en est de même pour le réseau temporaire.

Dans un mode de réalisation particulier, pour commander le basculement du dispositif du réseau temporaire vers le réseau privé, l'entité coordinatrice transmet un attribut de redémarrage, qui indique au dispositif le comportement qu'il doit adopter à chaque redémarrage, suivi d'une commande de redémarrage.

Les différents modes ou caractéristiques de réalisation mentionnés ci-après peuvent être ajoutés indépendamment ou en combinaison les uns avec les autres, aux étapes du procédé d'appairage tel que défini précédemment.

Selon une caractéristique particulière du procédé d'appairage, une clé de chiffrement temporaire est obtenue par l'entité coordinatrice en association avec l'identifiant de réseau temporaire et la clé de chiffrement associée au réseau privé est protégée au moyen de la clé de chiffrement temporaire.

La protection des caractéristiques du réseau privé au moyen de la clé de chiffrement temporaire permet d'apporter un deuxième niveau de sécurité à cette technique d'appairage.

Dans un premier mode de réalisation particulier, l'entité coordinatrice peut communiquer simultanément sur les deux réseaux, privé et temporaire. Dans ce cas, il n'y a pas d'interruption de service sur le réseau privé opérationnel, lors des échanges sur le réseau temporaire.

Dans un deuxième mode de réalisation particulier, l'entité coordinatrice ne peut communiquer qu'avec un seul des deux réseaux. Dans ce cas, le procédé d'appairage comprend en outre une étape de basculement de l'entité coordinatrice du réseau privé vers le réseau temporaire qu'elle forme, préalablement à la première étape de réception, et une deuxième étape de basculement de l'entité coordinatrice du réseau temporaire vers le réseau privé, préalablement à la deuxième étape de réception.

Selon une caractéristique particulière du procédé d'appairage, à l'issue d'une période d'attente et en l'absence de réception d'une demande d'association en provenance du dispositif, l'entité coordinatrice accepte uniquement de communiquer sur le réseau privé.

En cas d'échec de la mise en service, le réseau temporaire est désactivé. Ceci économise des ressources de l'entité coordinatrice et permet de ne pas offrir de faille à des tiers malveillants.

Selon une autre caractéristique particulière du procédé d'appairage, l'entité coordinatrice obtient d'un terminal l'identifiant de réseau temporaire par l'intermédiaire d'un canal sécurisé.

Selon un deuxième aspect, l'invention concerne également une entité coordinatrice d'un réseau privé sans fil, agencée pour communiquer avec au moins un dispositif, ladite entité comprenant :
- un module d'obtention d'un identifiant d'un dispositif à appairer et d'un identifiant de réseau temporaire propre audit dispositif;
- un premier module de réception sur le réseau temporaire d'une demande d'association au réseau temporaire en provenance du dispositif identifié ;
- un module de transmission sur le réseau temporaire audit dispositif identifié d'une clé de chiffrement associée au réseau privé sans fil et d'un identifiant du réseau privé, après vérification que le dispositif ayant transmis la demande d'association correspond au dispositif identifié ;
- un module de commande d'un basculement dudit dispositif du réseau temporaire au réseau privé sans fil :
- un deuxième module de réception sur le réseau privé d'une demande d'association au réseau privé en provenance dudit dispositif, l'entité coordinatrice et le dispositif identifié étant alors associés.

Le premier module de réception est activé suite à l'obtention des identifiants.

Les avantages énoncés pour le procédé selon le premier aspect sont transposables directement à l'entité coordinatrice.

Dans un mode de réalisation particulier, l'entité coordinatrice comprend en outre un troisième module de réception, agencé pour recevoir d'un terminal l'identifiant de réseau temporaire par l'intermédiaire d'un canal sécurisé.

Selon un troisième aspect, l'invention concerne en outre un système formant un réseau privé sans fil, comprenant au moins une entité coordinatrice selon le deuxième aspect et au moins un dispositif terminal sans fil, agencé pour s'associer avec l'entité coordinatrice, ledit dispositif disposant d'un identifiant unique et d'un identifiant de réseau temporaire qui lui est propre, ledit dispositif comprenant :
- un module de transmission, agencé pour transmettre sur un réseau une demande d'association à destination de l'entité coordinatrice ;
- un module de réception, agencé pour recevoir sur le réseau temporaire une clé de chiffrement associée au réseau privé sans fil, un identifiant du réseau privé et une commande de basculement du réseau temporaire au réseau privé sans fil ;
- un module de commande, agencé pour commander une transmission d'une première demande d'association au réseau temporaire à destination de l'entité coordinatrice sur le réseau temporaire et, sur réception de la commande de basculement, pour commander une transmission d'une deuxième demande d'association au réseau privé à destination de l'entité coordinatrice sur le réseau privé.

Selon un quatrième aspect, l'invention concerne un programme pour une entité coordinatrice, comprenant des instructions de code de programme destinées à commander l'exécution des étapes du procédé d'appairage précédemment décrit, lorsque ledit programme est exécuté par ladite entité et un support d'enregistrement lisible par une entité coordinatrice sur lequel est enregistré un programme pour une entité coordinatrice.

Les avantages énoncés pour le procédé d'appairage selon le premier aspect sont transposables directement au programme pour une entité coordinatrice et au support d'enregistrement.

L'invention sera mieux comprise à l'aide de la description suivante de modes de réalisation particuliers de la technique d'appairage, en référence aux dessins annexés sur lesquels :
- la figure 1 représente un réseau privé sans fil ;
- la figure 2 représente des étapes des procédés selon un mode particulier de réalisation de l'invention ;
- la figure 3 représente une entité coordinatrice selon un mode particulier de l'invention;
- la figure 4 représente un dispositif selon un mode particulier de l'invention.

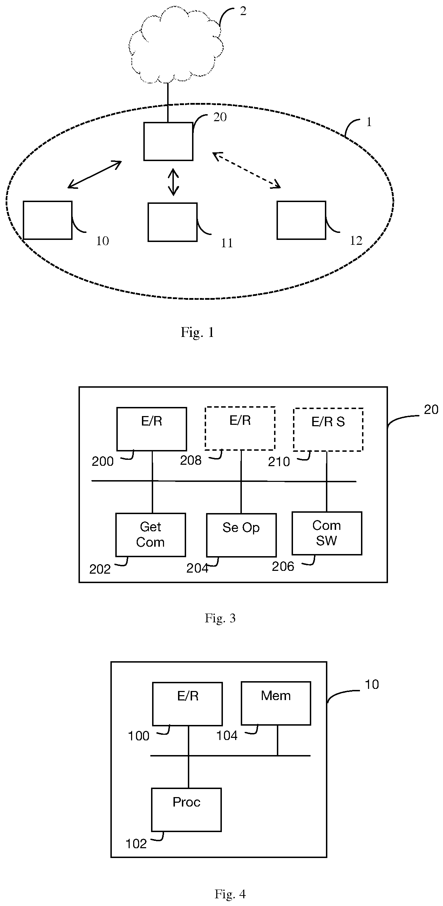

La figure 1 représente un réseau privé sans fil 1, dans lequel des dispositifs 10, 11, 12 terminal s'associent avec une entité coordinatrice 20. Le réseau privé sans fil 1 est par exemple un réseau personnel sans fil WPAN. L'entité coordinatrice est par exemple une passerelle d'accès à un réseau de communication 2. Les dispositifs terminaux 10-12 sont des capteurs ou des actionneurs. Un capteur permet par exemple de mesurer une température. Un actionneur permet par exemple de commander une lampe.

On se place dans la suite dans le cas du protocole ZigBee, s'appuyant sur la norme IEEE 802.15.4 pour les couches basses. La communication entre les dispositifs 10-12 et l'entité coordinatrice s'effectue sur un canal de communication courant, propre au réseau sans fil. Ce canal de communication courant est choisi parmi un des seize canaux possibles dans la bande de fréquence de 2,4 à 2,4835 GHz.

Le réseau privé 1 est identifié par un identifiant de réseau Id_NW_OP, codé en tant qu'élément d'information « Extended PAN Id » sur 64 bits. Une clé de chiffrement Kr est associée à ce réseau privé 1 et permet de protéger les échanges dans le réseau privé 1. Cette clé de chiffrement Kr est propre au réseau privé 1.

Un dispositif 10-12 est identifié par un identifiant de dispositif Id_D. Il s'agit par exemple d'une adresse MAC (pour « Media Access Control »).

On appelle association ou appairage un ensemble d'étapes à l'issue de desquelles un dispositif 10-12 communique avec l'entité coordinatrice 20 sur le canal de communication courant de manière sécurisée. Les échanges sont alors protégés au moyen de la clé de chiffrement Kr associée au réseau privé 1. Le dispositif 10-12 appartient alors au réseau privé 1. Sur la figure 1, les dispositifs 10 et 11 sont déjà appairés avec l'entité coordinatrice 20 et communiquent avec celle-ci en protégeant leurs échanges au moyen de la clé de chiffrement Kr associée au réseau privé 1. Le dispositif 12 est dit à appairer, c'est-à-dire qu'il ne dispose pas des informations associées au réseau privé 1.

Dans un premier mode de réalisation, on associe à un dispositif 10-12 à appairer un réseau temporaire qui lui est propre. Ce réseau temporaire est caractérisé par :
- un identifiant de réseau temporaire Id_NW_C, codé également sous la forme d'un élément d'information « extended PAN Id » ;
- une clé de chiffrement Kc associée au réseau temporaire.

Le réseau temporaire correspond à un réseau sur lequel le dispositif 12 à appairer et l'entité coordinatrice 20 ont rendez-vous afin d'effectuer les étapes permettant de fournir à ce dispositif les informations nécessaires à un accès au réseau privé 1. Ces étapes sont connues sous la terminologie anglaise de « commissionning » ou mise en service. Ce réseau de rendez-vous est temporaire et n'existe que pour une courte durée, correspondant à la durée nécessaire à la mise en service du dispositif à appairer. A titre illustratif, la durée d'existence du réseau temporaire est inférieure à une minute.

Le dispositif 12 à appairer dispose des caractéristiques de ce réseau temporaire. Les caractéristiques sont par exemple mémorisées dans un module mémoire du dispositif.

Dans un mode de réalisation, les caractéristiques sont également affichées sur une étiquette portant un code barre en deux dimensions (ou QR code pour « Quick Response Code »), cette étiquette étant apposée sur le dispositif. Un terminal, par exemple mobile, peut alors lire ces caractéristiques à l'aide d'une application de lecture (« QR reader »).

Dans un autre mode de réalisation, les caractéristiques sont mémorisées dans une étiquette RFID, pour « Radio Frequency Identification », apposée sur le dispositif à appairer. Un terminal peut alors lire ces caractéristiques en champ proche à l'aide d'une application.

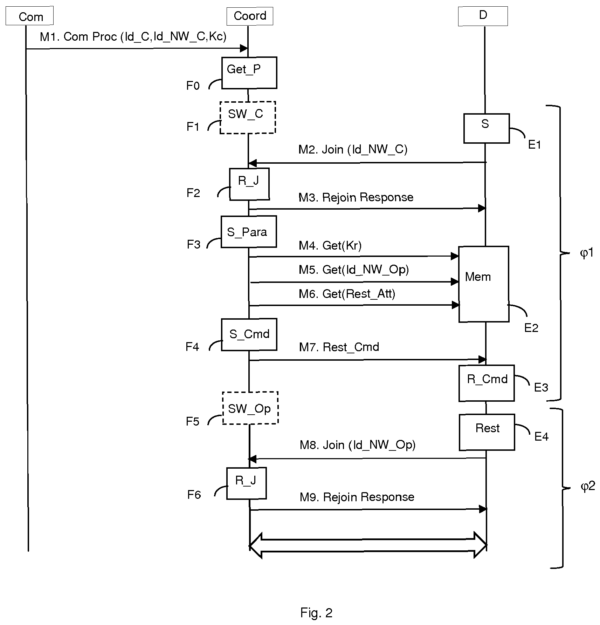

Nous allons maintenant décrire le procédé d'appairage, tel qu'il est mis en oeuvre par l'entité coordinatrice 20, et le procédé de communication, tel qu'il est mis en oeuvre par un dispositif 12 à appairer, dans un premier mode particulier de réalisation, en relation avec la figure 2.

Dans ce premier mode de réalisation, l'entité coordinatrice 20 est notamment agencée pour communiquer avec deux réseaux sans fil simultanément.

Dans une première étape F0 du procédé d'appairage, l'entité coordinatrice 20 obtient un identifiant du dispositif 12 à appairer ainsi que les caractéristiques du réseau temporaire, propre à ce dispositif 12. Dans un mode de réalisation, l'entité coordinatrice 20 obtient ces informations dans un message M1 transmis au moyen d'un canal sécurisé établi avec un terminal. Il s'agit par exemple d'un terminal mobile intelligent (« smartphone » en anglais) de l'utilisateur. Le canal sécurisé est par exemple un canal de communication WiFi (pour « Wireless Fidelity ») établi entre le terminal et l'entité coordinatrice 20. Ceci permet de mettre en service le dispositif 12 localement de manière simple, sans nécessiter un outil dédié ni un technicien pour réaliser les opérations de mise en service.

On rappelle ici que dans ce premier mode de réalisation, les caractéristiques du réseau temporaire comprennent un identifiant de réseau temporaire Id_NW_C et une clé de chiffrement Kc.

Les étapes mises en oeuvre sur le réseau temporaire forment une première phase ϕ1 de la mise en service du dispositif 12.

L'entité coordinatrice 20 se configure en attente de réception sur un canal de communication sur lequel les échanges dans le réseau temporaire vont être effectués. L'entité coordinatrice 20 forme ainsi le réseau temporaire requis et attend que le dispositif 12 à appairer l'y rejoigne. L'entité coordinatrice 20 arme une temporisation d'attente. Il est ici souligné que l'entité coordinatrice 20 se configure quasi-immédiatement (en prenant en compte les temps de traitement au niveau de l'entité coordinatrice) en attente de réception d'informations sur le réseau temporaire suite à l'obtention de l'identifiant du dispositif à appairer et des caractéristiques du réseau temporaire. A l'issue d'une période d'attente et en l'absence de réception d'une demande d'association en provenance du dispositif identifié, l'entité coordinatrice 20 quitte le réseau temporaire et accepte uniquement de communiquer sur le réseau privé.

On rappelle ici que dans ce premier mode de réalisation, l'entité coordinatrice 20 reste opérationnelle sur le réseau privé 1.

L'utilisateur du dispositif déclenche ensuite localement l'appairage. Il s'agit par exemple d'un appui sur une touche du dispositif. Dans une première étape E1 du procédé de communication, le dispositif 12 à appairer effectue un balayage des différents canaux de communication afin de détecter l'entité coordinatrice 20 et transmet une demande d'association au réseau temporaire au moyen du canal de communication du réseau temporaire, à destination de l'entité coordinatrice 20. Cette demande d'association au réseau temporaire correspond à un message M2 « Rejoin » du protocole ZigBee et comprend l'identifiant du réseau temporaire Id_NW_C.

Cette demande d'association au réseau temporaire en provenance du dispositif 12 à appairer est reçue par l'entité coordinatrice 20 au cours d'une étape de réception F2 du procédé d'appairage. L'entité coordinatrice 20 vérifie si l'identifiant de réseau correspond bien à celui du réseau temporaire. Lorsque cette vérification est négative, l'entité coordinatrice 20 ignore la demande d'association reçue.

Lorsque cette vérification est positive, dans une étape F3 du procédé d'appairage, l'entité coordinatrice 20 acquitte la réception de la demande d'association par un message M3 d'acquittement. Le message M3 correspond à un message « Rejoin Response » du protocole ZigBee. Toujours dans cette étape F3, l'entité coordinatrice 20 vérifie si le dispositif qui a transmis la demande d'association correspond bien au dispositif attendu, c'est-à-dire celui identifié par l'identifiant de dispositif. A titre d'exemple, dans un mécanisme dit de « Ping », un message « Echo » est transmis à destination du dispositif 12. S'il correspond bien au destinataire du message « Echo », le dispositif 12 transmet un message « Echo Reply ».

Dans le cas contraire, le dispositif ayant transmis la demande d'association n'étant pas le dispositif attendu, l'entité coordinatrice 20 repasse en attente de réception sur le canal de communication sur lequel les échanges dans le réseau temporaire vont être effectués.

Lorsque le dispositif ayant transmis la demande d'association est bien le dispositif attendu, l'entité coordinatrice 20 transmet au dispositif 12 identifié sur le réseau temporaire la clé de chiffrement Kr associée au réseau privé sans fil et l'identifiant du réseau privé Id_NW_Op. Ces informations sont par exemple transmises sous la forme de deux messages M4 et M5. Le message M5 correspond par exemple à un message « write attribute » du protocole ZigBee. L'entité coordinatrice 20 transmet également au cours de cette étape F3 dans un message M6 un attribut de redémarrage. Cet attribut de redémarrage permet d'indiquer au dispositif 12 les actions à mettre en oeuvre à chaque redémarrage. Plus précisément, à chaque redémarrage, le dispositif 12 doit rejoindre le réseau privé 1, dont il a reçu les caractéristiques. Dans ce premier mode de réalisation, la clé de chiffrement Kr associée au réseau privé, l'identifiant du réseau privé Id_NW_Op et l'attribut de redémarrage sont protégés au moyen de la clé de chiffrement temporaire Kc. Ainsi un tiers malveillant ne peut recevoir ces informations.

Ces messages M4, M5 et M6, plus précisément l'identifiant du réseau privé, la clé de chiffrement associée au réseau privé et l'attribut de redémarrage, sont reçus par le dispositif 12 sur le réseau temporaire dans une étape E2 du procédé de communication. Toujours dans cette étape E2, le dispositif 12 mémorise les informations reçues. Ainsi, à chaque redémarrage, le dispositif 12 rejoint le réseau privé identifié par Id_NW_Op et dispose de la clé de chiffrement Kr associée au réseau privé. Il n'est pas nécessaire de lui transmettre de nouveau ces informations. Cette transmission de la clé de chiffrement Kr associée au réseau privé sur le réseau temporaire est unique. La clé de chiffrement Kr n'est pas transmise ultérieurement sur le réseau privé 1. Ainsi la transmission de la clé de chiffrement Kr est effectuée de manière sécurisée, d'une part en raison de sa transmission sur un réseau temporaire propre au dispositif 12 à appairer, et d'autre part en raison de sa transmission protégée par une clé de chiffrement temporaire Kc propre au dispositif 12 à appairer.

Dans une étape F4 du procédé d'appairage, l'entité coordinatrice 20 commande un redémarrage du dispositif 12 à appairer. La transmission de l'attribut de redémarrage dans le message M6 à l'étape F3 et la commande de redémarrage à l'étape F4 forment ainsi une commande de basculement du dispositif 12 à appairer du réseau temporaire au réseau privé sans fil.

Cette commande de redémarrage est reçue par le dispositif 12 dans une étape E3 du procédé de communication.

La première phase ϕ1 de la mise en service du dispositif 12 est alors terminée. Le réseau temporaire n'est plus opérationnel.

Les étapes suivantes mises en oeuvre sur le réseau opérationnel forment une deuxième phase ϕ2 de la mise en service du dispositif 12. A l'issue de cette deuxième phase, le dispositif 12 est associé avec l'entité coordinatrice 20 et opérationnel sur le réseau privé 1.

Dans une étape E4 du procédé de communication, le dispositif 12 redémarre. Ce redémarrage entraîne un basculement du dispositif 12 du réseau temporaire vers le réseau privé 1 grâce à l'attribut de redémarrage reçu à l'étape E2.

Toujours dans cette étape E4 du procédé de communication, le dispositif 12 effectue un balayage des différents canaux de communication afin de détecter l'entité coordinatrice 20 et transmet une demande d'association au réseau privé à destination de l'entité coordinatrice 20 au moyen du canal de communication du réseau privé. Cette demande d'association au réseau privé correspond à un message M8 « Rejoin » du protocole ZigBee et comprend l'identifiant du réseau privé Id_NW_Op.

On rappelle ici que pour ce premier mode de réalisation, l'entité coordinatrice 20 est restée opérationnelle sur le réseau privé 1.

Cette demande d'association est reçue au cours d'une étape F6 du procédé d'appairage. L'entité coordinatrice 20 vérifie que l'identifiant de réseau correspond bien à celui du réseau privé 1. Lorsque cette vérification est positive, l'entité coordinatrice 20 acquitte par un message M9 d'acquittement la réception de la demande d'association. Le message M9 correspond à un message « Rejoin Response » du protocole ZigBee.

Dans un mode de réalisation particulier, l'entité coordinatrice 20 vérifie si le dispositif qui a transmis cette demande d'association correspond bien au dispositif attendu, c'est-à-dire celui identifié par l'identifiant de dispositif. A titre d'exemple, un mécanisme de « Ping » est de nouveau utilisé. Ceci permet de notifier l'utilisateur du dispositif que la mise en service a été effectuée. Dans le cas contraire, le dispositif ayant transmis la demande d'association n'étant pas le dispositif attendu, l'entité coordinatrice 20 repasse en attente de réception sur le canal de communication sur lequel les échanges dans le réseau privé sont effectués.

La deuxième phase ϕ2 de la mise en service du dispositif 12 est alors terminée.

A l'issue de l'ensemble de ces étapes, l'entité coordinatrice 20 et le dispositif 12 sont alors appairés ou associés sur le réseau privé 1. Le dispositif 12 s'est ainsi directement associé sur le réseau privé, sans risque que celui-ci s'associe à un réseau tiers, et de manière sécurisée. La clé de chiffrement partagée Kr associée au réseau privé 1 a été transmise de manière sécurisée, d'une part en raison de sa transmission sur un réseau temporaire propre au dispositif 12 à appairer, et d'autre part en raison de sa transmission protégée par une clé de chiffrement temporaire Kc propre au dispositif 12 à appairer. La clé de chiffrement partagée Kr associée au réseau privé n'a pas été transmise sur le réseau privé opérationnel. La mise en service a été effectuée sur un réseau temporaire, propre au dispositif à appairer, distinct du réseau privé opérationnel et ceci préalablement à l'association du dispositif avec l'entité coordinatrice sur le réseau privé opérationnel. Le réseau privé opérationnel n'a jamais été ouvert pour accueillir tout dispositif mais a accueilli uniquement des dispositifs identifiés et avec lesquels il a dialogué au préalable sur des réseaux temporaires dédiés.

Un deuxième mode de réalisation de la technique d'appairage est maintenant décrit toujours en relation avec la figure 2. Dans ce deuxième mode de réalisation, l'entité coordinatrice 20 est agencée pour communiquer avec un seul réseau sans fil.

L'entité coordinatrice 20 met en oeuvre l'étape F0 du procédé d'appairage et obtient un identifiant du dispositif 12 à appairer ainsi que les caractéristiques du réseau temporaire, propre à ce dispositif 12.

Dans une étape F1 du procédé d'appairage, l'entité coordinatrice 20 quitte le réseau privé 1, forme le réseau temporaire et attend que le terminal s'y connecte. Dans ce deuxième mode de réalisation, l'entité coordinatrice 20 n'est plus opérationnelle sur le réseau privé 1. Toutefois, l'interruption est de courte durée, c'est-à-dire la durée nécessaire au rendez-vous du dispositif 12 et de l'entité coordinatrice 20 sur le réseau temporaire.

Les étapes El, E2 et E3 du procédé de communication, décrites précédemment, sont mises en oeuvre par le dispositif 12. Parallèlement, les étapes F2 et F3 du procédé d'appairage, décrites précédemment, sont mises en oeuvre par l'entité coordinatrice 20. A l'issue de ces étapes, le dispositif 12 a reçu l'identifiant du réseau privé, la clé de chiffrement Kr associée au réseau privé et l'attribut de redémarrage.

Au cours de l'étape F4 du procédé d'appairage, l'entité coordinatrice 20 commande un redémarrage du dispositif 12 à appairer.

Dans une étape F5 du procédé d'appairage, l'entité coordinatrice 20 bascule du réseau temporaire au réseau privé 1 et se configure en attente de réception sur le canal de communication associé au réseau privé. L'entité coordinatrice 20 redevient opérationnelle sur le réseau privé 1.

Une fois la commande de redémarrage reçue (étape E3), le dispositif 12 redémarre (étape E4) sur le réseau privé et transmet sur le réseau privé la demande d'association à destination de l'entité coordinatrice 20.

Cette demande d'association est reçue au cours de l'étape F6 du procédé d'appairage.

A l'issue de ces étapes, l'entité coordinatrice 20 et le dispositif 12 sont alors appairés ou associés. Ce deuxième mode de réalisation présente les mêmes avantages que ceux décrits précédemment en relation avec le premier mode de réalisation.

Dans un troisième mode de réalisation, à l'étape F0, l'entité coordinatrice 20 obtient un identifiant du dispositif 12 à appairer et détermine les caractéristiques du réseau temporaire à partir de l'identifiant du dispositif 12 à l'aide d'un algorithme partagé entre le dispositif 12 et l'entité coordinatrice 20. Les autres étapes sont inchangées. Ce troisième mode de réalisation permet de mettre en oeuvre la technique d'appairage avec uniquement un échange de l'identifiant du dispositif à appairer. Ce troisième mode de réalisation présente également les mêmes avantages que ceux décrits précédemment en relation avec le premier mode de réalisation.

Dans un quatrième mode de réalisation, les caractéristiques du réseau temporaire sont mémorisées sur une étiquette RFID apposée sur le dispositif 12 et l'entité coordinatrice 20 les obtient (étape F0) en lisant en champ proche l'étiquette RFID. Les autres étapes de la technique d'appairage sont inchangées.

Dans les premier, deuxième, troisième et quatrième modes de réalisation décrits précédemment, les caractéristiques du réseau temporaire comprennent un identifiant de réseau temporaire Id_NW_C et une clé de chiffrement Kc associée au réseau temporaire.

En variante à ces quatre modes de réalisation, les caractéristiques du réseau temporaire comprennent uniquement l'identifiant du réseau temporaire Id_NW_C. Dans cette variante, la clé de chiffrement Kr associée au réseau privé et l'identifiant du réseau privé Id_NW_Op sont transmis en clair sur le réseau temporaire. Il est ici rappelé que le réseau temporaire dédié à la mise en service du dispositif 12 permet déjà d'assurer un premier niveau de sécurité.

Dans les modes de réalisation décrits précédemment, l'identifiant du réseau privé et l'attribut de redémarrage sont protégés au moyen de la clé de chiffrement temporaire. En variante à ces quatre modes de réalisation, l'identifiant du réseau privé Id_NW_Op et l'attribut de redémarrage sont protégés au moyen de la clé de chiffrement Kr associée au réseau privé.

Nous allons maintenant décrire une entité coordinatrice dans un mode particulier de réalisation de l'invention en référence à la figure 3. Une telle entité coordinatrice 20 comprend notamment :
- un module 202 d'obtention d'un identifiant d'un dispositif à appairer, d'un identifiant de réseau temporaire propre au dispositif et d'une clé de chiffrement associée au réseau temporaire également propre au dispositif ;
- un premier module 200 d'émission et de réception, agencé pour communiquer avec un dispositif à appairer sur le réseau temporaire, notamment pour recevoir une demande d'association en provenance du dispositif identifié ;
- un module 204 de transmission sur le réseau temporaire au dispositif identifié d'une clé de chiffrement associée au réseau privé sans fil, d'un identifiant du réseau privé par l'intermédiaire du premier module 200 d'émission et de réception ;
- un module 206 de commande d'un basculement du dispositif identifié du réseau temporaire au réseau privé sans fil.

Le premier module 200 est activé suite à l'obtention de l'identifiant du dispositif à appairer et des caractéristiques du réseau temporaire.

Dans un mode de réalisation particulier, le module 204 de transmission est en outre agencé pour transmettre un attribut de redémarrage au dispositif identifié et le module 206 est agencé pour commander un redémarrage au dispositif, commandant ainsi le basculement du dispositif identifié du réseau temporaire au réseau privé sans fil.

Dans le premier mode de réalisation, l'entité coordinatrice 20 comprend en outre :
- un deuxième module 208 d'émission/réception sur le réseau privé, agencé notamment pour recevoir une demande d'association en provenance du dispositif identifié.

Le module 204 de transmission est en outre agencé pour protéger la transmission de la clé de chiffrement associée au réseau privé sans fil et de l'identifiant du réseau privé au moyen de la clé de chiffrement associée au réseau temporaire.

Dans le deuxième mode de réalisation, le premier module 200 d'émission/réception est en outre agencé pour basculer d'un réseau à un autre et ainsi pour communiquer avec au moins un dispositif sur le réseau privé 1. La demande d'association émise par le dispositif identifié sur le réseau privé 1 est alors reçue au moyen de ce premier module 200 d'émission/réception. L'entité coordinatrice 20 ne comprend alors pas de deuxième module 208 d'émission/réception.

Dans un mode de réalisation particulier, l'entité coordinatrice 20 comprend en outre un troisième module 210 de réception, agencé pour recevoir d'un terminal l'identifiant de réseau temporaire, la clé de chiffrement associée au réseau temporaire et l'identifiant de l'équipement terminal par l'intermédiaire d'un canal sécurisé. Il s'agit par exemple d'un canal de communication sans fil WiFi.

Dans un mode de réalisation particulier, le module 202 obtient uniquement l'identifiant du dispositif à appairer et détermine les caractéristiques du réseau temporaire à partir de l'identifiant de ce dispositif à l'aide d'un algorithme partagé avec le dispositif à appairer.

Nous allons maintenant décrire un dispositif 10-12 dans un mode particulier de réalisation de l'invention en référence à la figure 4. Un tel dispositif 10-12 dispose d'un identifiant de réseau temporaire qui lui est propre et comprend notamment :
- un module 100 d'émission et de réception, agencé pour communiquer avec une entité coordinatrice sur un canal de communication associé à un réseau ;
- un module 102 de traitement, agencé pour :
   - transmettre sur un réseau une demande d'association à destination de l'entité coordinatrice ;
   - recevoir sur le réseau temporaire une clé de chiffrement associée au réseau privé sans fil, un identifiant du réseau privé et une commande d'un basculement du réseau temporaire au réseau privé sans fil ;
   - commander une transmission d'une première demande d'association à destination de l'entité coordinatrice sur le réseau temporaire et, sur réception de la commande de basculement, pour commander une transmission d'une deuxième demande d'association à destination de l'entité coordinatrice sur le réseau privé.

Dans un mode de réalisation particulier, le dispositif 10-12 comprend en outre un module 104 de mémorisation de l'identifiant de réseau temporaire.

Dans un mode de réalisation particulier, le module de mémorisation 104 est en outre agencé pour mémoriser une clé de chiffrement associée au réseau temporaire et propre au dispositif.

Dans un mode de réalisation particulier, le module 102 est en outre agencé pour déterminer les caractéristiques du réseau temporaire à partir de l'identifiant du dispositif à l'aide d'un algorithme partagé avec l'entité coordinatrice 20.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 202, 204, 206 sont agencés pour mettre en oeuvre le procédé précédemment décrit. Il s'agit de préférence de modules logiciels comprenant des instructions logicielles pour faire exécuter les étapes du procédé d'appairage précédemment décrit, mises en oeuvre par l'entité coordinatrice. L'invention concerne donc aussi :
- un programme pour une entité coordinatrice, comprenant des instructions de code de programme destinées à commander l'exécution des étapes du procédé d'appairage précédemment décrit, lorsque ledit programme est exécuté par ladite entité ;
- un support d'enregistrement lisible par une entité coordinatrice sur lequel est enregistré le programme pour une entité.

Dans un mode de réalisation particulier, le module 102 est agencé pour mettre en oeuvre le procédé précédemment décrit. Il s'agit de préférence de modules logiciels comprenant des instructions logicielles pour faire exécuter les étapes du procédé de communication précédemment décrit, mises en oeuvre par le dispositif à appairer. L'invention concerne donc aussi :
- un programme pour un dispositif, comprenant des instructions de code de programme destinées à commander l'exécution des étapes du procédé de communication précédemment décrit, lorsque ledit programme est exécuté par ledit dispositif ;
- un support d'enregistrement lisible par un dispositif sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système formant un réseau privé sans fil, comprenant au moins une entité coordinatrice telle que décrite précédemment et au moins un dispositif tel que décrit précédemment.

Les modes de réalisation ont été décrits dans le cadre du protocole ZigBee, s'appuyant sur la norme IEEE 802.15.4 pour les couches basses. Les modes de réalisation sont également applicables à d'autres technologies radio, telles que DECT ULE, ZWave, Enocean, Wifi. Les modes de réalisation sont particulièrement avantageux dans le cas de dispositifs ne disposant pas d'écran permettant à un utilisateur de valider l'association à une entité coordinatrice.

Ces modes de réalisation trouvent également une application dans le cadre de réseaux hautement sécurisés, car les échanges se font sur des réseaux qui ne sont jamais ouverts à l'association pour d'autres dispositifs, et tous les échanges sont en permanence sécurisés par une clé de chiffrement non publique.

## Revendications

1. Procédé d'appairage d'un dispositif (10-12) avec une entité coordinatrice (20) d'un réseau privé sans fil (1), ledit procédé comprenant les étapes suivantes mises en oeuvre par l'entité coordinatrice :
- une étape d'obtention (F0) d'un identifiant dudit dispositif et d'un identifiant de réseau temporaire propre au dispositif ;
- une étape d'attente du dispositif identifié sur le réseau temporaire déclenchée suite à l'obtention desdits identifiants ;
- une première étape de réception (F2) sur le réseau temporaire d'une demande d'association au réseau temporaire en provenance du dispositif identifié ;
- une étape de transmission (F3) sur le réseau temporaire audit dispositif identifié d'une clé de chiffrement associée au réseau privé sans fil et d'un identifiant du réseau privé, après vérification que le dispositif ayant transmis la demande d'association correspond au dispositif identifié ;
- une étape de commande (F4) d'un basculement dudit dispositif du réseau temporaire au réseau privé sans fil :
- une deuxième étape de réception (F6) sur le réseau privé d'une demande d'association en provenance dudit dispositif identifié, l'entité coordinatrice et le dispositif étant alors associés.

2. Procédé d'appairage selon la revendication 1, dans lequel une clé de chiffrement temporaire est obtenue en association avec l'identifiant de réseau temporaire et la clé de chiffrement associée au réseau privé est protégée au moyen de la clé de chiffrement temporaire.

3. Procédé selon la revendication 1, comprenant en outre une étape de basculement (F1) de l'entité coordinatrice du réseau privé vers le réseau temporaire qu'elle forme, préalablement à la première étape de réception, et une deuxième étape de basculement (F5) de l'entité coordinatrice du réseau temporaire vers le réseau privé, préalablement à la deuxième étape de réception.

4. Procédé selon la revendication 1, dans lequel, à l'issue d'une période d'attente et en l'absence de réception d'une demande d'association en provenance du dispositif, l'entité coordinatrice accepte uniquement de communiquer sur le réseau privé.

5. Procédé selon la revendication 1, dans lequel l'entité coordinatrice obtient d'un terminal l'identifiant de réseau temporaire par l'intermédiaire d'un canal sécurisé.

6. Entité coordinatrice (20) d'un réseau privé sans fil (1), agencée pour communiquer avec au moins un dispositif (10-12), ladite entité comprenant :
- un module (202) d'obtention d'un identifiant d'un dispositif à appairer et d'un identifiant de réseau temporaire propre audit dispositif;
- un premier module (200) de réception sur le réseau temporaire d'une demande d'association au réseau temporaire en provenance du dispositif identifié, activé suite à l'obtention desdits identifiants ;
- un module (204) de transmission sur le réseau temporaire audit dispositif identifié d'une clé de chiffrement associée au réseau privé sans fil et d'un identifiant du réseau privé, après vérification que le dispositif ayant transmis la demande d'association correspond au dispositif identifié ;
- un module (206) de commande d'un basculement dudit dispositif du réseau temporaire au réseau privé sans fil :
- un deuxième module (200, 208) de réception sur le réseau privé d'une demande d'association au réseau privé en provenance dudit dispositif, l'entité coordinatrice et le dispositif identifié étant alors associés.

7. Entité coordinatrice selon la revendication 6, comprenant en outre un troisième module (210) de réception, agencé pour recevoir d'un terminal l'identifiant de réseau temporaire par l'intermédiaire d'un canal sécurisé.

8. Système formant un réseau privé sans fil, comprenant au moins une entité coordinatrice selon la revendication 6 et au moins un dispositif sans fil, agencé pour s'associer avec l'entité coordinatrice (20), ledit dispositif disposant d'un identifiant unique et d'un identifiant de réseau temporaire qui lui est propre, ledit dispositif comprenant :
- un module (100) de transmission, agencé pour transmettre sur un réseau une demande d'association à destination de l'entité coordinatrice ;
- un module (100) de réception, agencé pour recevoir sur le réseau temporaire une clé de chiffrement associée au réseau privé sans fil, un identifiant du réseau privé et une commande de basculement du réseau temporaire au réseau privé sans fil ;
- un module (102) de commande, agencé pour commander une transmission d'une première demande d'association au réseau temporaire à destination de l'entité coordinatrice sur le réseau temporaire et, sur réception de la commande de basculement, pour commander une transmission d'une deuxième demande d'association au réseau privé à destination de l'entité coordinatrice sur le réseau privé.

9. Programme pour une entité coordinatrice d'un réseau privé sans fil, comprenant des instructions de code de programme destinées à commander l'exécution des étapes du procédé selon l'une des revendications 1 à 5, lorsque ledit programme est exécuté par ladite entité.

10. Support d'enregistrement lisible par une entité coordinatrice d'un réseau privé sans fil sur lequel est enregistré le programme selon la revendication 9.

## Patentansprüche

1. Verfahren zur Paarung einer Vorrichtung (10-12) mit einer koordinierenden Entität (20) eines privaten drahtlosen Netzwerks (1), wobei das Verfahren die folgenden Schritte umfasst, die von der koordinierenden Entität durchgeführt werden:
- einen Schritt der Gewinnung (F0) einer Kennung der Vorrichtung und einer Kennung eines temporären Netzwerks, das der Vorrichtung eigen ist;
- einen Schritt des Wartens auf die identifizierte Vorrichtung in dem temporären Netzwerk, der im Anschluss an die Gewinnung der Kennungen ausgelöst wird;
- einen ersten Schritt des Empfangs (F2), über das temporäre Netzwerk, einer Anforderung zur Verbindung mit dem temporären Netzwerk von der identifizierten Vorrichtung;
- einen Schritt des Sendens (F3) eines Verschlüsselungsschlüssels, der dem privaten drahtlosen Netzwerk zugeordnet ist, und einer Kennung des privaten Netzwerks über das temporäre Netzwerk an die identifizierte Vorrichtung, nach Überprüfung, dass die Vorrichtung, welche die Verbindungsanforderung gesendet hat, der identifizierten Vorrichtung entspricht;
- einen Schritt der Steuerung (F4) einer Umschaltung der Vorrichtung von dem temporären Netzwerk zu dem privaten drahtlosen Netzwerk;
- einen zweiten Schritt des Empfangs (F6), über das private Netzwerk, einer Verbindungsanforderung von der identifizierten Vorrichtung, wobei die koordinierende Entität und die Vorrichtung dann verbunden werden.

2. Verfahren zur Paarung nach Anspruch 1, wobei ein temporärer Verschlüsselungsschlüssel in Verbindung mit der Kennung des temporären Netzwerks gewonnen wird und der dem privaten Netzwerk zugeordnete Verschlüsselungsschlüssel mittels des temporären Verschlüsselungsschlüssels geschützt wird.

3. Verfahren nach Anspruch 1, welches außerdem einen Schritt der Umschaltung (F1) der koordinierenden Entität von dem privaten Netzwerk zu dem temporären Netzwerk, das sie bildet, vor dem ersten Schritt des Empfangs und einen zweiten Schritt der Umschaltung (F5) der koordinierenden Entität von dem temporären Netzwerk zu dem privaten Netzwerk vor dem zweiten Schritt des Empfangs umfasst.

4. Verfahren nach Anspruch 1, wobei am Ende einer Wartezeit, und wenn kein Empfang einer Verbindungsanforderung von der Vorrichtung erfolgt, die koordinierende Entität ausschließlich akzeptiert, über das private Netzwerk zu kommunizieren.

5. Verfahren nach Anspruch 1, wobei die koordinierende Entität von einem Endgerät die Kennung des temporären Netzwerks über einen sicheren Kanal erhält.

6. Koordinierende Entität (20) eines privaten drahtlosen Netzwerks (1), die dafür ausgelegt ist, mit wenigstens einer Vorrichtung (10-12) zu kommunizieren, wobei die Entität umfasst:
- ein Modul (202) zur Gewinnung einer Kennung einer zu paarenden Vorrichtung und einer Kennung eines temporären Netzwerks, das der Vorrichtung eigen ist;
- ein erstes Modul (200) zum Empfang, über das temporäre Netzwerk, einer Anforderung zur Verbindung mit dem temporären Netzwerk von der identifizierten Vorrichtung, das im Anschluss an die Gewinnung der Kennungen aktiviert wird;
- ein Modul (204) zum Senden eines Verschlüsselungsschlüssels, der dem privaten drahtlosen Netzwerk zugeordnet ist, und einer Kennung des privaten Netzwerks über das temporäre Netzwerk an die identifizierte Vorrichtung, nach Überprüfung, dass die Vorrichtung, welche die Verbindungsanforderung gesendet hat, der identifizierten Vorrichtung entspricht;
- ein Modul (206) zur Steuerung einer Umschaltung der Vorrichtung von dem temporären Netzwerk zu dem privaten drahtlosen Netzwerk;
- ein zweites Modul (200, 208) zum Empfang, über das private Netzwerk, einer Anforderung zur Verbindung mit dem privaten Netzwerk von der Vorrichtung, wobei die koordinierende Entität und die identifizierte Vorrichtung dann verbunden werden.

7. Koordinierende Entität nach Anspruch 6, welche außerdem ein drittes Modul (210) zum Empfang umfasst, das dafür ausgelegt ist, von einem Endgerät die Kennung des temporären Netzwerks über einen sicheren Kanal zu empfangen.

8. System, welches ein privates drahtloses Netzwerk bildet und wenigstens eine koordinierende Entität nach Anspruch 6 und wenigstens eine drahtlose Vorrichtung, die dafür ausgelegt ist, sich mit der koordinierenden Entität (20) zu verbinden, umfasst, wobei die Vorrichtung über eine eindeutige Kennung und über eine Kennung eines temporären Netzwerks, das ihr eigen ist, verfügt, wobei die Vorrichtung umfasst:
- ein Sendemodul (100), das dafür ausgelegt ist, über ein Netzwerk eine Verbindungsanforderung an die koordinierende Entität zu senden;
- ein Empfangsmodul (100), das dafür ausgelegt ist, über das temporäre Netzwerk einen Verschlüsselungsschlüssel, der dem privaten drahtlosen Netzwerk zugeordnet ist, eine Kennung des privaten Netzwerks und einen Befehl zur Umschaltung von dem temporären Netzwerk zu dem privaten drahtlosen Netzwerk zu empfangen;
- ein Steuerungsmodul (102), das dafür ausgelegt ist, eine Übertragung einer ersten Anforderung zur Verbindung mit dem temporären Netzwerk über das temporäre Netzwerk zu der koordinierenden Entität zu steuern und, bei Empfang des Befehls zur Umschaltung, eine Übertragung einer zweiten Anforderung zur Verbindung mit dem privaten Netzwerk über das private Netzwerk zu der koordinierenden Entität zu steuern.

9. Programm für eine koordinierende Entität eines privaten drahtlosen Netzwerks, welches Programmcodeanweisungen umfasst, die dazu bestimmt sind, die Ausführung der Schritte des Verfahrens nach einem der Ansprüche 1 bis 5 zu steuern, wenn das Programm von der Entität ausgeführt wird.

10. Aufzeichnungsmedium, das von einer koordinierenden Entität eines privaten drahtlosen Netzwerks lesbar ist und auf dem das Programm nach Anspruch 9 aufgezeichnet ist.

## Claims

1. Method for pairing a device (10-12) with a coordinating entity (20) of a wireless private network (1), said method comprising the following steps implemented by the coordinating entity:
- a step of obtaining (F0) of an identifier of said device and of a temporary network identifier specific to the device;
- a step of waiting for the device identified on the temporary network triggered following the obtaining of said identifiers;
- a first step of reception (F2) over the temporary network of a request for association with the temporary network originating from the identified device;
- a step of transmission (F3) over the temporary network to said identified device of an encryption key associated with the wireless private network and of an identifier of the private network, after verification that the device having transmitted the association request corresponds to the identified device;
- a step of commanding (F4) of a switchover of said device from the temporary network to the wireless private network;
- a second step of reception (F6) over the private network of an association request originating from said identified device, the coordinating entity and the device then being associated.

2. Pairing method according to Claim 1, in which a temporary encryption key is obtained in association with the temporary network identifier and the encryption key associated with the private network is protected by means of the temporary encryption key.

3. Method according to Claim 1, further comprising a step of switchover (F1) of the coordinating entity from the private network to the temporary network that it forms, prior to the first reception step, and a second step of switchover (F5) of the coordinating entity from the temporary network to the private network, prior to the second reception step.

4. Method according to Claim 1, in which, at the end of a waiting period and in the absence of reception of an association request originating from the device, the coordinating entity accepts only to communicate over the private network.

5. Method according to Claim 1, in which the coordinating entity obtains from a terminal the temporary network identifier via a secured channel.

6. Coordinating entity (20) of a wireless private network (1), arranged to communicate with at least one device (10-12), said entity comprising:
- a module (202) for obtaining an identifier of a device to be paired and a temporary network identifier specific to said device;
- a first module (200) for receiving, over the temporary network, a request for association with the temporary network originating from the identified device, activated following the obtaining of said identifiers;
- a module (204) for transmitting, over the temporary network to said identified device, an encryption key associated with the wireless private network and an identifier of the private network, after verification that the device having transmitted the association request corresponds to the identified device;
- a module (206) for commanding a switchover of said device from the temporary network to the wireless private network;
- a second module (200, 208) for receiving, over the private network, a request for association with the private network originating from said device, the coordinating entity and the identified device then being associated.

7. Coordinating entity according to Claim 6, further comprising a third reception module (210), arranged to receive, from a terminal, the temporary network identifier via a secured channel.

8. System forming a wireless private network, comprising at least one coordinating entity according to Claim 6 and at least one wireless device, arranged to be associated with the coordinating entity (20), said device having a unique identifier and a temporary network identifier which is specific to it, said device comprising:
- a transmission module (100), arranged to transmit over a network an association request to the coordinating entity;
- a reception module (100), arranged to receive over the temporary network an encryption key associated with the wireless private network, an identifier of the private network and a command to switch over from the temporary network to the wireless private network;
- a control module (102), arranged to order a transmission of a first request for association with the temporary network to the coordinating entity over the temporary network and, on reception of the switchover command, to order a transmission of a second request for association with the private network to the coordinating entity over the private network.

9. Program for a coordinating entity of a wireless private network, comprising program code instructions intended to control the execution of the steps of the method according to one of Claims 1 to 5, when said program is run by said entity.

10. Storage medium that can be read by a coordinating entity of a wireless private network on which the program according to Claim 9 is stored.
